# DEMANDE DE BREVET EUROPEEN

(11) **EP 1 814 070 A1**
(43) Date de publication de la demande: **01.08.2007**
(21) Numéro de dépôt: 07100889.0
(22) Date de dépôt: 22.01.2007
(51) Int. Cl.: G06Q 20/00, G07B 17/00

(54) **Procédé de paiement d'un service au moyen d'une machine de traitement de courrier**

(30) Priorité: 31.01.2006 FR 0650337
(71) Demandeur: NEOPOST TECHNOLOGIES, 92220 Bagneux (FR)
(72) Inventeur: Chatte, Fabien, 94130 Nogent sur Marne (FR); Gilham, Dennis T, Essex CM4 9LT (GB)
(74) Mandataire: David, Alain

(57) **Abrégé**

Système de paiement d'un service délivré à un utilisateur par un fournisseur de ce service, le système comportant des moyens d'impression (10D) pour imprimer un récépissé (28) délivré par ce service et portant le montant à payer pour le service demandé, et des moyens d'affranchissement (18) pour imprimer sur le récépissé ou sur une étiquette (30) apposée à son coté une empreinte postale portant un montant d'affranchissement égal à ce montant à payer.

## Description

### Domaine technique

La présente invention se rapporte au domaine général du paiement de services et elle concerne plus particulièrement un procédé pour assurer un paiement de service par des moyens d'affranchissement en lieu et place des paiements traditionnels en monnaie ou par carte.

### Etat de la technique

Aujourd'hui, lorsque l'on souhaite procéder au paiement d'un service obtenu notamment au travers du réseau Internet, il faut disposer d'un compte auprès du fournisseur de service ou pouvoir régler immédiatement ce service par un virement bancaire ou par une carte bancaire de paiement ou de crédit. II en est ainsi par exemple lorsque l'on souhaite expédier un colis avec un transporteur privé comme DHL® ou UPS® par exemple. Or, dans une entreprise, lorsque celle-ci ne dispose pas de compte auprès du fournisseur de service souhaité, l'obtention d'une autorisation de virement ou d'un débit par carte bancaire doit en général être demandée auprès du service comptable de l'entreprise. Mais, on comprend aisément que si une telle solution peut être envisagée, elle ne peut l'être que de façon exceptionnelle, le service comptable ne pouvant être constamment à la disposition des employés pour répondre à leurs demandes en matière de paiement de services.

II existe donc un besoin, aujourd'hui non satisfait, pour un procédé de paiement alternatif qui évite les inconvénients précités.

### Divulgation de l'invention

La présente invention a donc pour objet un nouveau procédé de paiement d'un service délivré à un utilisateur par un fournisseur de ce service, caractérisé en ce que le paiement du service demandé est effectué par l'impression, au coté ou sur un récépissé délivré par ce service et portant le montant à payer pour le service demandé, d'une empreinte postale portant un montant d'affranchissement égal à ce montant à payer.

Ainsi, ce moyen simple de paiement par des moyens d'affranchissement évite les inconvénients précités du paiement par carte ou par virement.

Le récépissé peut être une première étiquette imprimée par l'utilisateur et apposée sur le produit objet du service demandé ou un titre de transport ou de réservation d'un produit ou service.

L'impression de l'empreinte postale peut être effectuée par une machine à affranchir sur une seconde étiquette qui est ensuite apposée sur ledit produit au coté de ladite première étiquette ou directement sur ledit récépissé ou sur une seconde étiquette qui est ensuite apposée sur ledit récépissé.

La présente invention concerne aussi un de paiement d'un service délivré à un utilisateur par un fournisseur de ce service, caractérisé en ce qu'il comporte des moyens d'impression pour imprimer un récépissé délivré par ce service et portant le montant à payer pour le service demandé, et des moyens d'affranchissement pour imprimer sur ledit récépissé ou sur une étiquette apposée à son coté une empreinte postale portant un montant d'affranchissement égal à ce montant à payer.

Avantageusement, lesdits moyens d'impression comportent une imprimante standard d'un poste de travail de l'utilisateur et lesdits moyens d'affranchissement comportent une machine à affranchir.

De préférence, ladite machine à affranchir est reliée à un serveur informatique du concessionnaire de cette machine lui-même en liaison avec un serveur informatique du fournisseur de service.

Selon un mode de réalisation avantageux, le poste de travail de l'utilisateur est relié par une liaison de données à la machine à affranchir.

### Brève description des dessins

D'autres caractéristiques et avantages de la présente invention ressortiront mieux de la description suivante, faite à titre indicatif et non limitatif, en regard des dessins annexés, sur lesquels:
- la figure 1 montre un exemple d'architecture de réseau permettant la mise en oeuvre du procédé de paiement de service selon l'invention, et
- la figure 2 est un organigramme illustrant les différentes étapes du procédé de l'invention.

### Mode(s) de réalisation de l'invention

Le principe de l'invention repose, dans le cadre du paiement d'un service obtenu notamment au travers du réseau Internet, sur le remplacement des moyens de paiements actuels, carte ou virement, par un paiement au moyen d'un système d'affranchissement de courrier à la disposition de l'utilisateur du service demandé. Comme il est connu, un tel système est destiné à imprimer une empreinte postale sur laquelle est porté un montant d'affranchissement ayant une valeur monétaire et qui sert de preuve du paiement de l'affranchissement pour le service postal destinataire du courrier muni de cette empreinte postale. Avec l'invention, il est proposé de se servir de cette preuve de paiement pour justifier du paiement d'un service quelconque auprès d'un fournisseur de service autre que la traditionnelle administration postale.

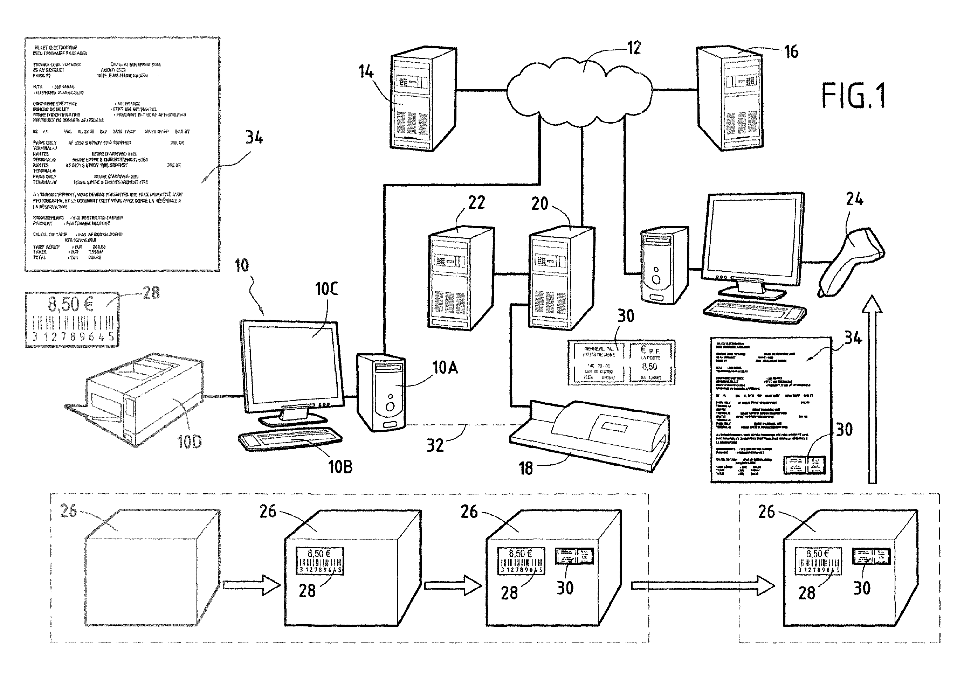

La figure 1 illustre l'architecture de réseau nécessaire à la mise en oeuvre de l'invention.

Au niveau de l'expéditeur, il est organisé autour d'un poste utilisateur traditionnel 10 pouvant faire ou non partie d'un réseau local interne de l'entreprise à laquelle appartient ce poste utilisateur et comportant classiquement une unité centrale 10A, une interface utilisateur (clavier 10B et écran 10C) et une imprimante standard 10D, et à partir duquel l'utilisateur pourra accéder au service demandé. Par exemple, un service d'expédition de colis d'un transporteur privé tel que DHL® ou UPS®, un service de réservation de billets de transport ou un service de retrait d'un produit quelconque auprès de son détenteur. Pour cet accès, ce poste utilisateur 10 est relié, via un réseau de communications, typiquement le réseau Internet 12, à un serveur informatique 14 (fournisseur N°1), 16 (fournisseur N°2) du fournisseur du service demandé.

II comporte également un système d'affranchissement de courrier 18 relié, comme il est connu, à un serveur informatique 20 du concessionnaire de ce système, lui-même relié à un serveur informatique 22 de l'administration postale, Le serveur informatique du concessionnaire est aussi en liaison avec le serveur de fourniture de service au travers du réseau de communications 12.

Le système d'affranchissement de courrier est typiquement une machine à affranchir standard disposant d'une interface utilisateur. Elle comporte donc au moins un écran qui peut alors être tactile ou plus classiquement un afficheur LCD associé à un clavier avec des touches de fonctions. Cette interface utilisateur permet généralement la visualisation et la saisie de différentes informations relatives au service souhaité d'affranchissement (numéro d'identification machine, montant de la transaction d'affranchissement, classe de courrier, pays de destination, logo désiré, etc.) affichées par la machine ou entrées par l'utilisateur. Toutefois, dans le cadre de l'invention et comme il sera explicité plus avant, il est fait appel au niveau de cette machine à affranchir à la seule fonction de saisie d'un montant d'affranchissement.

Enfin, ce réseau informatique de gestion de données comporte au niveau du destinataire du colis ou de la réservation, un dispositif de lecture et d'identification 24 intégrant notamment un numériseur pour permettre une vérification du paiement par le fournisseur du service. Ce dispositif est relié via le réseau de communications 12 au serveur informatique du fournisseur de service.

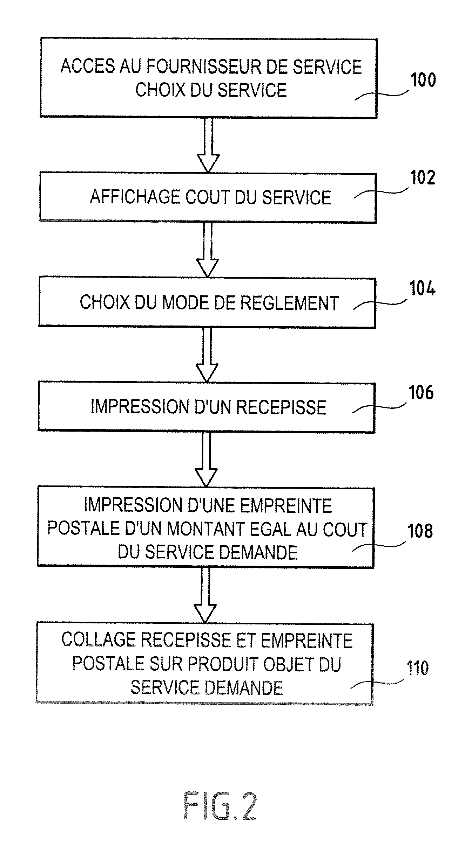

La figure 2 montre un organigramme détaillant les différentes étapes permettant selon l'invention le paiement d'un service quelconque au moyen d'une machine à affranchir le courrier (voir aussi la figure 1).

L'utilisateur qui, dans une entreprise ou une administration, souhaite par exemple expédier un colis 26 dans un pays que son transporteur habituel, c'est-à-dire celui chez qui l'entreprise dispose d'un compte, ne désert pas, va chercher depuis son poste de travail 10, au moyen d'un outil de recherche sur Internet classique, un autre transporteur qui désert la destination recherchée. Une fois celui-ci trouvé, il va dans une première étape 100 accéder à la page d'accueil du service d'expédition de cet autre transporteur et, en suivant les instructions affichées, saisir toutes les données nécessaires à son envoi, comme le pays de destination, le poids du colis, la valeur assurée, etc. ainsi que ses propres coordonnées. A ces données saisies correspond un coût du service d'expédition qui est alors sur l'écran de l'utilisateur dans une étape 102. Si l'utilisateur l'accepte, il lui est alors proposé dans une étape 104 d'en régler le montant selon le mode de paiement de son choix. En l'espèce, l'utilisateur n'étant pas client de ce nouveau transporteur, il lui est proposé de choisir entre un règlement par carte bancaire, virement ou paiement partenaire, ce dernier choix étant validé par l'utilisateur pour, selon l'invention, lui permettre un paiement au moyen d'une machine à affranchir. Un code à barres unique, de préférence à deux dimensions, est alors affiché sur l'écran de l'utilisateur accompagné du montant à payer pour le service demandé afin que celui-ci puisse, dans une étape 106, imprimer sur ses moyens d'impression 10D une première étiquette 28 portant ces deux informations. Comme il est connu, la présence d'un code à barres sur le colis est destinée à assurer un suivi et une reconnaissance de celui-ci pendant son transport de l'expéditeur au destinataire. L'étiquette ainsi imprimée est ensuite collée par l'utilisateur sur le colis à expédier.

Le colis ainsi étiqueté est remis par l'utilisateur à son service courrier ou à la personne chargée de son expédition au sein de l'entreprise, laquelle ayant connaissance du montant à payer porté sur l'étiquette 28 procédera, dans une étape 108, au moyen d'une machine à affranchir en sa possession, à l'impression sur une seconde étiquette 30 d'une empreinte postale d'un montant d'affranchissement équivalent à ce montant à payer. La seconde étiquette portant l'empreinte postale est alors, dans une étape 110, également collée sur le colis à expédier au coté de la première étiquette 28. Le processus d'expédition est achevé et le colis peut être remis à un bureau de réception du transporteur ou laissé à sa disposition dans l'entreprise.

Le contrôle par le transporteur du paiement de l'utilisateur se fait à deux niveaux. Le premier est simplement visuel, il s'agit pour le transporteur de s'assurer de la présence de l'empreinte postale et de la correspondance entre le montant d'affranchissement imprimé sur la seconde étiquette et le montant à payer porté sur la première. En cas d'identité, il existe alors une présomption de paiement et le colis peut donc être Le second niveau de contrôle est plus complexe, il s'agit pour le transporteur de de la validité de l'empreinte postale et il dispose pour cela de différents éléments qui lui ont été fournis par l'administration postale dans le cadre d'un contrat partenaire avec le Concessionnaire de la machine à affranchir, par exemple des clés cryptographiques lui permettant le déchiffrement des codes d'authentification portés par l'empreinte postale ou la vérification des signatures ayant servies à leur élaboration.

Le transporteur est payé quotidiennement ou selon une périodicité déterminée avec le concessionnaire de la machine à affranchir ou l'administration postale. En effet, comme il est connu, celui-ci reçoit périodiquement des machines à affranchir auxquelles il est relié un état comptable détaillé des opérations d'affranchissement qu'elles ont réalisées dans une période donnée. Dans le cadre de l'invention, il est aussi prévu qu'il puisse recevoir des fournisseurs de service partenaires qui acceptent un paiement au moyen de ses machines à affranchir, un état des opérations effectuées par ces fournisseurs de service, de sorte qu'il lui devient possible d'effectuer un lien entre ces deux états comptables et donc de permettre le paiement de chaque fournisseur en associant un montant d'affranchissement relevé sur une machine à affranchir déterminée à un montant d'affranchissement identique communiqué par un fournisseur partenaire.

II est possible aussi et même préférable que le fournisseur de service soit payé avant toute exécution du service. Pour cela, il est prévu que le poste de travail de l'utilisateur soit relié à la machine à d'affranchir directement par une liaison de données 32 (si un seul poste de travail) ou au travers d'un réseau interne d'entreprise (non représenté) (si plusieurs postes de travail). II est ainsi possible d'effectuer un transfert automatique de données entre les deux entités et donc de communiquer à la machine à affranchir, outre le montant à payer qui n'aura alors plus besoin d'être saisi au clavier de cette machine, la référence du fournisseur du service demandé par l'utilisateur. Une fois l'affranchissement réalisé, cette référence avec le montant d'affranchissement correspondant pourra être retransmise immédiatement (ou en fin de journée) au serveur du concessionnaire pour qu'il informe à son tour le fournisseur de service et éventuellement procède immédiatement au règlement du service qui sera délivré à l'utilisateur.

Cette procédure est particulièrement avantageuse en cas de réservation d'un titre de transport, par exemple un billet d'avion, de train ou de ferry. En effet, en accédant au site Internet du transporteur, l'utilisateur pourra imprimer un billet électronique 34 portant mention du montant à payer pour ce transport puis passer ce billet dans la machine à affranchir pour y imprimer l'empreinte postale 30 (ou y imprimer l'empreinte postale sur une étiquette collée ensuite sur le billet précédemment imprimé). Lors de l'embarquement, le préposé du transporteur (du fournisseur du service) pourra vérifier visuellement de par la présence de l'empreinte postale sur le billet électronique que ce billet à été payé et après confrontation des données de cette empreinte (suite à une numérisation de celle-ci) avec celles présentes dans le serveur du fournisseur de service, que ce paiement lui est bien parvenu et donc autoriser l'embarquement. A défaut, il y aura présomption de fraude et l'embarquement sera refusé.

## Revendications

1. Procédé de paiement d'un service délivré à un utilisateur par un fournisseur de ce service, **caractérisé en ce que** le paiement du service demandé est effectué par l'impression, au coté ou sur un récépissé délivré par ce service et portant le montant à payer pour le service demandé, d'une empreinte postale portant un montant d'affranchissement égal à ce montant à payer.

2. Procédé selon la revendication 1, **caractérisé en ce que** ledit récépissé est une première étiquette imprimée par l'utilisateur et apposée sur le produit objet du service demandé.

3. Procédé selon la revendication 2, **caractérisé en ce que** ladite impression de l'empreinte postale est effectuée par une machine à affranchir sur une seconde étiquette qui est ensuite apposée sur ledit produit au coté de ladite première étiquette.

4. Procédé selon la revendication 1, **caractérisé en ce que** ledit récépissé est un titre de transport ou de réservation d'un produit ou service.

5. Procédé selon la revendication 4, **caractérisé en ce que** ladite impression de l'empreinte postale est effectuée par une machine à affranchir directement sur ledit récépissé ou sur une seconde étiquette qui est ensuite apposée sur ledit récépissé.

6. Système de paiement d'un service délivré à un utilisateur par un fournisseur de ce service, **caractérisé en ce qu'**il comporte des moyens d'impression (10D) pour imprimer un récépissé (28) délivré par ce service et portant le montant à payer pour le service demandé, et des moyens d'affranchissement (18) pour imprimer sur ledit récépissé ou sur une étiquette (30) apposée à son coté une empreinte postale portant un montant d'affranchissement égal à ce montant à payer.

7. Système selon la revendication 6, **caractérisé en ce que** lesdits moyens d'impression comportent une imprimante standard d'un poste de travail de l'utilisateur (10).

8. Système selon la revendication 6, **caractérisé en ce que** lesdits moyens d'affranchissement comportent une machine à affranchir.

9. Système selon la revendication 8, **caractérisé en ce que** ladite machine à affranchir est reliée à un serveur informatique (20) du concessionnaire de cette machine lui-même en liaison avec un serveur informatique du fournisseur de service (14, 16).

10. Système selon les revendications 7 et 8, **caractérisé en ce que** le poste de travail de l'utilisateur est relié par une liaison de données (32) à la machine à affranchir.
